## Europäisches Patentamt

## European Patent Office

## Office européen des brevets

(19)

(11) **EP 1 105 709 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(21) Anmeldenummer: **99942848.5**

(22) Anmeldetag: **12.08.1999**

(51) Int Cl.⁷: $G01M\ 17/007$

(86) Internationale Anmeldenummer:
**PCT/EP99/05875**

(87) Internationale Veröffentlichungsnummer:
**WO 00/009982 (24.02.2000 Gazette 2000/08)**

(54) **VERFAHREN UND VORRICHTUNG ZUR BERÜCKSICHTIGUNG DER REIBUNGSVERLUSTE BEI DER MASSENSIMULATION AUF ORTSFESTEN PRÜFSTÄNDEN**

METHOD AND DEVICE FOR TAKING INTO ACCOUNT FRICTION LOSSES DURING THE SIMULATION OF MASSES ON STATIONARY TEST BENCHES

PROCEDE ET DISPOSITIF POUR PRENDRE EN CONSIDERATION LES PERTES PAR FRICTION LORS DE LA SIMULATION DE MASSES SUR DES BANCS D'ESSAI STATIONNAIRES

(84) Benannte Vertragsstaaten:
**AT BE CH CY DE DK ES FI FR GB GR IE IT LI LU MC NL PT SE**

(30) Priorität: **13.08.1998 DE 19836711**

(43) Veröffentlichungstag der Anmeldung:
**13.06.2001 Patentblatt 2001/24**

(73) Patentinhaber: **Schenck Pegasus GmbH**
**64293 Darmstadt (DE)**

(72) Erfinder: **FREITAG, Gernot**
**D-64295 Darmstadt (DE)**

(74) Vertreter: **Behrens, Helmut, Dipl.-Ing.**
**Gross-Gerauer Weg 55**
**64295 Darmstadt (DE)**

(56) Entgegenhaltungen:
**EP-A- 0 655 617       EP-A- 0 696 729**
**FR-A- 2 323 996       GB-A- 2 149 520**

EP 1 105 709 B1

**Beschreibung**

Die Erfindung betrifft ein Verfahren zur Korrektur der Reibungsverluste bei der Massensimulation auf ortsfesten Prüfständen gemäß dem Oberbegriff des Patentanspruchs 1 sowie eine Vorrichtung zur Durchführung dieses Verfahrens gemäß dem Oberbegriff des Patentanspruchs 8.

Zur stationären Fahrzeugprüfung werden als ortsfeste Prüfstände vornehmlich Rollenprüfstände verwendet. Dabei sind die Antriebsräder eines Fahrzeugs mit den Rollen des Prüfstandes drehmomentmäßig gekoppelt. Da sich die Fahrzeuge auf diesen Prüfständen nicht bewegen, müssen die aus der Beschleunigung der Fahrzeugmasse resultierenden Trägheitskräfte durch den Prüfstand simuliert werden, wenn das Massenträgheitsmoment des Prüfstandes nicht mit denen der Fahrzeugmasse übereinstimmt. Hierbei ist es üblich, die Differenz der Trägheitskräfte durch ein Belastungsmoment zu simulieren, das beispielsweise mit Hilfe einer Gleichstrommaschine erzeugt wird. Die Größe des Belastungsmoments wird durch einen dynamischen Regelkreis in Abhängigkeit der jeweiligen Beschleunigung geregelt.

Um beispielsweise das auf solchen Prüfständen ermittelte Abgasverhalten eines Fahrzeugs genau ermitteln zu können, werden von der Automobilindustrie und den Umweltbehörden hohe Anforderungen an die Meßgenauigkeit derartiger Rollenprüfstände gestellt. Deshalb darf das vorgegebene Belastungsmoment nicht durch prüfstandsbezogene Meßfehler verfälscht werden. So wurde bisher großes Augenmerk auf die Auswahl und Plazierung der Prüfstandslagerung gelegt, so daß das Meßergebnis möglichst nicht durch Lagerreibung verfälscht wird. Deshalb hat man Lagerungen gewählt, die möglichst geringe und reproduzierbare Reibungswerte aufweisen, die dann im Meßergebnis mit berücksichtigbar sind. So hat man in gewissen Zeitabständen eine geschwindigkeitsabhängige Verlustkennlinie des Prüfstands aufgenommen und diese Verluste in die Belastungssollwerte eingerechnet. Dadurch war es möglich, die von den US-Umweltbehörden der EPA geforderten prüfstandsbezogenen Meßfehler von < ± 0,1% vom Kraftnennwert einzuhalten.

Allerdings können diese hohen Meßgenauigkeiten nur eingehalten werden, wenn sich die Prüfstandsverluste nach Aufnahme der Verlustkennlinie nicht verändern oder nach jeder Veränderung eine neue Verlustkennlinie aufgenommen und bei der Simulation mit berücksichtigt wird. Deshalb hat man derartige Kalibrierungen in gewissen Zeitabständen oder bei Änderung entsprechender Einflußfakoren erneut vorgenommen, um längerfristige Veränderungen der Einflußfaktoren hinreichend zu berücksichtigen. Um möglichst alle zeitlichen Veränderungen erfassen zu können, müßte die Verlustkennlinie im Grunde vor jedem neuen Prüfvorgang vorgenommen werden, was wegen des großen Aufwandes nicht praktikabel ist. Insbesondere wären damit nicht die Änderungen erfaßbar, die während des zeitlichen Verlaufs des Prüfvorgangs auftreten und dann das Meßergebnis verfälschen würden.

Aus der DE 26 15 193 C2 ist ein Verfahren und eine Einrichtung zur Leistungsmessung von Verbrennungsmotoren auf einem ortsfesten Rollenprüfstand bekannt. Dazu wird zur Ermittlung der konstanten und geschwindigkeitsabhängigen Verluste vor der Leistungsmessung der Brennkraftmaschine eine Verlustleistungsmessung in Abhängigkeit der Geschwindigkeit durchgeführt. Hierzu werden die Laufrollen über die Räder des Fahrzeugs beschleunigt und während dieser Phase die Leistung gemessen.

Dann wird die Brennkraftmaschine abgekuppelt und die Leistung während der Verzögerung erfaßt. Daraus wird die Verlustleistung des Fahrzeugstranges und des Prüfstandes ermittelt und bei der Leistungsmessung der Brennkraftmaschine berücksichtigt. Allerdings sind hiermit keine Prüfstandsverluste ermittelbar, deren Einflußfaktoren sich nach dem Verlustleistungsmeßlauf ändern können und so zu Meßfehlern führen. Bei der Leistungsmessung ist es zwar bekannt, Verluste der Brennkraftmaschine durch Korrektur des Meßergebnisses zu berücksichtigen, die aufgrund von Abweichungen der Umgebungstemperatur und des Luftdrucks am Prüfort gegenüber festgelegten Normbedingungen auftreten, hiermit sind allerdings keine zeitlich variierenden Prüfstandsverluste ausgleichbar, die nach der Verlustleistungsmessung auftreten können.

Der Erfindung liegt deshalb die Aufgabe zugrunde, ein Verfahren und eine Vorrichtung zu schaffen, durch die möglichst viele Prüfstandsverluste berücksichtigt werden, insbesondere auch eine Reihe von zeitlich variierenden Änderungen während des Prüfbetriebes.

Diese Aufgabe wird durch die in Patentanspruch 1 und 8 angegebene Erfindung gelöst. Weiterbildungen und vorteilhafte Ausführungsbeispiele sind in den abhängigens Ansprüchen angegeben.

Die Erfindung hat den Vorteil, daß im Grunde die prüfstandsbezogenen Verluste durch die Aufnahme einer einzigen Verlustkennlinie auf Dauer erfaßt und rechnerisch in das Meßergebnis mit einbezogen werden können. Dadurch bleiben die auf dem Prüfstand ermittelten Meßergebnisse in ihrem Meßfehler zeitlich mindestens konstant, auch wenn sich die Einflußfaktoren wie die Temperatur, der Luftdruck, die Luftfeuchte und/oder die Belastung durch unterschiedliche Prüflingsgewichte zwischen den Aufnahmen der Verlustkennlinie ändern.

Weiterhin hat die Erfindung den Vorteil, daß während eines Fahrzeugprüfvorgangs nicht die Bedingungen bei der Kalibrierung des Prüfstands eingehalten werden müssen, da diese unmittelbar durch Erfassung der Einflußfaktoren und vorheriger Berechnung der Prüfstandskoeffizienten rechnerisch mit berücksichtigt werden.

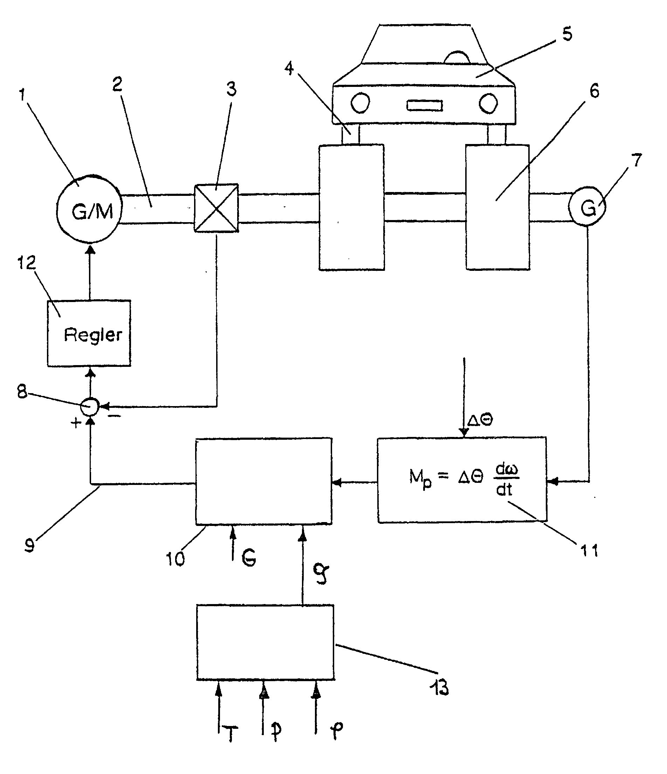

Die Erfindung wird anhand eines Ausführungsbeispiels, das in der Zeichnung dargestellt ist, näher erläutert. Die Zeichnung zeigt eine schematische Darstellung eines Rollenprüfstandes mit einem Regelkreis 9, der nach einem Differenzierglied 11 eine Korrekturschaltung 10 mit einer Witterungserfassungsvorrichtung 13 enthält, und der das Belastungsmoment einer Gleichstrommaschine 1 entsprechend der zu simulierenden Masse regelt.

In der Zeichnung ist eine Gleichstrommaschine 1 dargestellt, die über eine Verbindungswelle 2 drehbar mit den Prüfstandsrollen 6 verbunden ist. Auf den Prüfstandsrollen 6 ist ein Fahrzeug 5 schematisch dargestellt, dessen Antriebsräder 4 kraftschlüssig mit den Prüfstandsrollen 6 in Verbindung stehen. Die Prüfstandsrollen 6 sind weiterhin über die gleiche Welle mit einer Drehzahlerfassungseinrichtung 7 verbunden, die als Tachogenerator ausgebildet ist.

Zwischen der Gleichstrommaschine 1 und den ihr gegenüberstehenden Prüfstandsrollen 6 ist an der Verbindungswelle 2 ein Drehmomentaufnehmer 3 angeordnet, der elektrisch mit dem Regelkreis 9 verbunden ist. Dabei besteht der Regelkreis 9 aus einem Differenzierglied 11, aus einer Verlustkorrekturschaltung 10 an die eine Witterungserfassungsvorrichtung 13 angeschlossen ist, einen Regler 12 und einen Verknüpfungspunkt 8. Der Tachogenerator 7 ist mit dem Differenzierglied 11 und dieses mit der Verlustkorrekturschaltung 10 verbunden. Weiterhin ist ein Verknüpfungspunkt 8 vorgesehen, der mit dem Eingang des Reglers 12, dem Drehmomentaufnehmer 3 und dem Ausgang der Verlustkorrekturschaltung 10 verknüpft ist. Der Regler 12 liefert andererseits über seinen Ausgang ein Regelsignal an die Gleichstrommaschine 1.

Die mit der Verlustkorrekturschaltung 10 verbundene Witterungserfassungsvorrichtung 13 enthält Meßfühler für den Druck P, die Temperatur T und die Feuchte φ der Luft. Daraus bildet diese einen Wert, der der Luftdichte ρ proportional ist und der Verlustkorrekturschaltung 10 zugeführt wird. Die Witterungserfassungsvorrichtung 13 kann aber auch in die Verlustkorrekturschaltung 10 integriert sein, wenn Mittel zur Erfassung der Luftparameter vorhanden sind, aus denen die Luftdichte ρ ermittelbar ist. Die Verlustkorrekturschaltung 10 enthält weiterhin einen Eingang oder Mittel, durch die das Gewicht des Prüflings und/oder das Gewicht der Prüfstandsrollen eingegeben oder erfaßt werden kann. In jedem Fall wird der Verlustkorrekturschaltung 10 ein Wert der Luftdichte ρ und ein Wert des Fahrzeuggewichts G und der Prüfstandsrollengewichte zugeführt und dient zur Ermittlung der gewichtsabhängigen Lagerreibung und der Verluste durch die Luftverwirbelung an den drehenden Prüfstandsteilen.

Die vorstehend beschriebene Einrichtung arbeitet nach folgenden Verfahrensschritten: Bei der Prüfung eines Fahrzeuges 5 auf einem Rollenprüfstand treibt das Fahrzeug 5 als Prüfling über seine Fahrzeugräder 4 die Prüfstandsrollen 6 an. Dadurch wird gleichzeitig der Tachogenerator 7 und die Gleichstrommaschine 1 über die Verbindungswelle 2 mitbewegt. Der Tachogenerator 7 erzeugt dabei ein Signal, das der Geschwindigkeit bzw. der Winkelgeschwindigkeit ω proportional ist. Das zur Massensimulation erforderliche Belastungsmoment wird mittels der Gleichstrommaschine 1 erzeugt, deren gewünschtes Belastungsmoment durch einen Drehmomentregler 12 gesteuert wird. Mit dem Drehmomentaufnehmer 3 wird jeweils das Drehmoment der Verbindungswelle 2 erfaßt, das dem Ist-Drehmoment entspricht.

Da am physikalisch vorhandenen Prüfstandsträgheitsmoment $\Theta_P$ zwei Drehmomente $M_P$ und $M_F$ angreifen, kann vorausgesetzt werden, daß nur dann eine korrekte Massensimulation vorliegt, wenn das Prüfstandsdrehmoment $M_P$ derart vorgegeben wird, daß das Trägheitsmoment des Prüfstandes $\Theta_P$ die gleiche Beschleunigung erfährt wie sie das Fahrzeug 5 auf der Straße unter Einwirkung von Fahrzeugdrehmoment $M_F$ alleine erfahren würde. Da bei dieser idealen Massensimulation leider das Fahrzeugdrehmoment $M_F$ nur in den seltensten Fällen direkt meßbar ist, muß dies in der Mehrzahl der Fälle indirekt auf der Basis seiner Beschleunigungswirkung $(d\omega/dt)$ auf die Prüfstandsträgheitsmasse $\Theta_P$ ermittelt werden. Zur mathematischen Ermittlung des Fahrzeugdrehmoments $M_F$ ist davon auszugehen, daß die Massenbeschleunigung des gesamten Prüfstandes so groß ist wie die Beschleunigung des Fahrzeugs. Deshalb wird aus der ermittelten Beschleunigung $(d\omega/dt)$ und dem bekannten Fahrzeugträgheitsmoment $\Theta_F$ auf das verursachende gesuchte Fahrzeugdrehmoment $M_F$ geschlossen. Mathematisch ist deshalb

$$M_P=(\Theta_F-\Theta_P)\frac{d\omega}{dt}=\Delta\Theta\frac{d\omega}{dt}$$

Aus diesem mathematischen Zusammenhang ist schließlich das zu erzeugende Belastungsdrehmoment und die Rollenbeschleunigung im stationären Zustand ableitbar. Dies stellt im Grunde die Struktur der bekannten Massensimulation nach dem differenzierenden Verfahren dar. Bei einem solchen Regelverfahren kann also in der Praxis aus der Differenzierung des Winkelgeschwindigkeitssignals $d\omega/dt$ und dem vorgegebenen Massenträgheitsmoment $\Theta_F$ des Fahrzeugs und des Prüfstands $\Theta_P$ ein Drehmomentregler 12 konzipiert werden, der das gewünschte Belastungsmoment $M_P$ ermittelt und ausregelt. Dabei wird aus dem differenzierenden Winkelgeschwindigkeitssignal $d\omega/dt$ des Tachogenerators 7 und unter Berücksichtigung der bekannten Massenträgheitsmomente $\Theta_F$ des Fahrzeugs und des Prüfstands $\Theta_P$ ein variabler Drehmoment-Sollwert ermittelt. Dieser wird mit dem vom Drehmomentaufnehmer 3 ermittelten Ist-Drehmoment verglichen und bei einer möglichen Abweichung wird die Belastungsmaschine 1 durch einen Regler 12 so gesteuert, daß dieses Belastungsmoment als Massensimulation wirkt.

Bei diesem bekannten Massensimulationsver-

EP 1 105 709 B1

fahren entsteht allerdings ein Fehler, der durch die Reibungsverluste des Rollenprüfstandes verursacht wird. So werden Reibungsverluste in den Prüfstandslagern erzeugt, die hauptsächlich von den konstruktiven Maßnahmen der Lager abhängen. Moderne Lagerkonstruktionen besitzen absolut kleine Lagerreibungen und reproduzierbare geschwindigkeitsabhängige Reibungswerte, so daß diese mit einer Verlustkurvenaufnahme ermittelbar sind und bei der Ermittlung des Drehmoment-Sollwerts berücksichtigt werden können.

Allerdings treten auch Reibungsverluste beim Prüfstand auf, die wegen ihres Variantenreichtums im Grunde nicht reproduzierbar berücksichtigt werden können und bisher auch nicht berücksichtigt wurden. So existiert neben der geschwindigkeitsabhängigen Lagerreibung noch eine lastabhängige Lagerreibung, die neben dem Rollengewicht auch von unterschiedlichen Fahrzeuggewichten abhängig ist. Da die Verlustkurve des Prüfstandes in der bisherigen Praxis nur in einem Arbeitspunkt ohne Fahrzeugbelastung ermittelt wurde, liefern unterschiedliche Fahrzeugbelastungen auch andere lastabhängige Lagerreibungen, die zu einem Fehler bei der Massensimulation führen.

Ebenfalls entstehen Reibungsverluste am Prüfstand durch Strömungsvorgänge an den Oberflächen sich drehender Teile, die auch von den physikalischen Eigenschaften der Luft abhängen, wobei die Dichte der Luft linear in dem geschwindigkeitsabhängigen Luftreibungsterm eingeht. Die Luftdichte ist wiederum abhängig von Druck, Temperatur und Feuchte der Luft. Da sich diese Wetterbedingungen ständig ändern können, kann die geforderte Invarianz dieser Reibungskomponente nicht sichergestellt werden. Dies gilt selbst bei klimatisierten Räumen, denn die Prüfkabinen werden in der Regel nicht druckdicht ausgeführt. Dabei variiert das spezifische Gewicht der Luft aufgrund von Wettereinflüssen um etwa 10 bis 12,5 %, reine Luftdruckschwankungen liegen im Bereich von ca. 5 %. Hinzu kommt eine Abhängigkeit des spezifischen Gewichts von der Luftfeuchtigkeit, wobei feuchte Luft leichter ist als trockene. Dieser Effekt wird größer mit steigender Temperatur und kann einige Prozent betragen. Dieser Einfluß auf die Prüfstandsbedingungen ist speziell bei Freiluftprüfständen nicht zu vernachlässigen. Absolut ergibt sich damit eine mögliche Variation der Luftreibungsverluste bis etwa 0,1 % Meßgenauigkeit in einem mittleren Geschwindigkeitsbereich. Dieser Einfluß erhöht sich wegen der quadratischen Gesetzmäßigkeit erheblich in höheren Geschwindigkeitsbereichen, die insbesondere bei derzeitigen Dauerlauftests immer häufiger gefahren werden.

Bei bisherigen Verfahren wurden solche witterungsbedingten Fehler in ihrer Varianz überhaupt nicht berücksichtigt, sondern lediglich bei einer Wetterlage mit der Aufnahme der Verlustkennlinie indirekt mitermittelt. Derartige Meßfehler durch Varianz der Wetterlage, die immer stärker bei Dauerlauftests auftreten, können gewünschte Meßgenauigkeiten von ± 0,1 % vom Endwert des Zugmeßbereichs für sich schon überschreiten, so daß sie nicht mehr vernachlässigbar sind.

Grundidee der Erfindung ist es, die Prüfstandsparameter für die unterschiedlichen Reibungsverluste in einen Arbeitspunkt durch Aufnahme einer Verlustkennlinie zu ermitteln und die zeitlich variierenden Verluste durch Erfassung der Einflußparameter rechnerisch zu berücksichtigen. So setzen sich die Reibungsverluste $F_v$ eines Rollenprüfstandes aus den beiden Komponenten Lagerreibung $F_{La}$ und Luftreibung $F_{Lu}$ zusammen. Ein Modell der Reibungsverluste ist mathematisch als

$$F_v = F_{La} + F_{Lu}$$

zu beschreiben. Für die beiden Komponenten lassen sich folgende mathematischen Modelle aufstellen, die die dominierenden Komponenten enthalten:

$$F_{La} = c_1\,G + c_2\,v^{2/3}$$

$$F_{Lu} = c_3\,\rho\,v^2$$

wobei

v = Geschwindigkeit
G = Gewicht der Lagerbelastung
$\rho$ = Luftdichte
$c_1$ bis $c_3$ = Prüfstandskoeffizienten.

Damit ergibt sich das folgende Modell für die Verluste des Rollenprüfstandes:

$$F_v = c_1\,G + c_2\,v^{2/3} + c_3\,\rho\,v^2$$

Da das gewählte Modell linear in den Prüfstandskoeffizienten $c_1$ bis $c_3$ ist, kann mit Hilfe einer gemessenen Verlustkurve ein lineares Gleichungssystem aufgestellt werden, das nach dem gesuchten Koeffizienten gelöst wird. Praktisch hat sich dabei ein System zur Aufnahme der Verlustkurve bewährt, das mit 256 Geschwindigkeitsstützstellen arbeitet, wobei aus diesen Werten die Prüfstandskoeffizienten $c_1$ bis $c_3$ errechenbar sind. In jedem Fall müssen die Prüfstandskoeffizienten in mindestens drei Geschwindigkeitsbereichen erfaßt werden. Dabei sollte ein Geschwindigkeitsbereich bei einer kleinen Geschwindigkeit nahe 0 vorgesehen sein, bei der die lastabhängige Lagerreibung dominierend ist. Weiterhin müßte eine Verlustaufnahme bei einer mittleren Geschwindigkeit durchgeführt werden, bei der die geschwindigkeitsabhängige Lagerreibung relativ deutlich hervortritt. Weiterhin ist eine Verlustkennlinie im hohen Geschwindigkeitsbereich von Vorteil, da durch die quadratische Luftreibungskomponente dieser Wert dort explizit in Erscheinung tritt.

In der Verlustkorrekturschaltung 10 werden zunächst während der Verlustaufnahme mit Hilfe der Werte für die Luftdichte ρ das Rollengewicht G in Abhängigkeit der zugehörigen Geschwindigkeitsbereiche für alle Meßpunkte die gesuchten Prüfstandskoeffizienten $c_1$, $c_2$, $c_3$ berechnet und gespeichert. Diese Koeffizienten $c_1$, $c_2$, $c_3$ sind besonders genau ermittelbar, wenn im Sinne der Gaußschen Methode der kleinsten Fehlerquadrate aus einer möglichst hohen Meßwerteschar die Berechnung vorgenommen wird.

Bei den nachfolgenden Fahrzeugprüfungen wird dann mit Hilfe der erfaßten Wetterdatenwerte T, P, φ und dem vorgegebenen oder erfaßten Fahrzeuggewicht G die jeweiligen Prüfstandsverluste errechnet. Diese Rechnung ist während des Prüfbetriebs möglich, da vorab die Prüfstandskoeffizienten errechnet und in der Korrekturschaltung gespeichert wurden. Da bei jeder Änderung der Witterungsverhältnisse und jedem Fahrzeugwechsel die entsprechend veränderten Werte erfaßbar bzw. eingebbar sind, kann online jeweils die zugehörige Verlustleistung des Prüfstands errechnet werden.

Diese jeweiligen Reibungsverluste werden in der Korrekturschaltung 10 mit dem vom Differenzierglied 11 ermittelten Soll-Drehmoment $M_P$ verknüpft und liefern ein um die Verluste bereinigtes Soll-Drehmoment. Dies wird nachfolgend am Verknüpfungspunkt 8 mit den vom Istwertaufnehmer 3 gelieferten Ist-Drehmoment verglichen, wobei deren Differenz mit Hilfe des Reglers 12 ausgeregelt wird. Die Gleichstrommaschine 1 erzeugt daraufhin ein Drehmoment, mit dessen Hilfe die Fahrzeugmasse durch den Rollenprüfstand simuliert wird.

Die Korrekturschaltung 10 kann dabei als elektronische Schaltung ausgebildet sein oder als Rechenprogramm für eine Rechenschaltung dargestellt werden. Diese Rechnerschaltung kann auch in dem Differenzierglied 11 integriert sein oder ein Teil des Prüfstandsrechners darstellen.

Ein derartiges Verfahren zur Verlustkorrektur von variablen Reibungsverlusten kann auch bei Flachbahnprüfständen oder anderen Prüfständen angewandt werden, deren Reibungsverluste vom Prüflingsgewicht und/oder den physikalischen Lufteigenschaften abhängen.

**Patentansprüche**

1. Verfahren zur Berücksichtigung der Reibungsverluste bei der Massensimulation auf ortsfesten Prüfständen, bei dem mit Hilfe einer Verlustleistungsaufnahme in Abhängigkeit der Geschwindigkeit die geschwindigkeitsabhängigen Reibungsverluste zur Tarierung des Prüfstands ermittelt werden, **dadurch gekennzeichnet, daß** die Prüfstandsparameter für die unterschiedlichen Reibungsverluste in einem Arbeitspunkt durch die Aufnahme einer Verlustkennlinie ermittelt werden und die zeitlich variierenden Reibungsverluste durch Erfassung der Einflußparameter rechnerisch berücksichtigt und zur Korrektur des Belastungsmoments verwandt werden.

2. Verfahren nach Anspruch 1, **dadurch gekennzeichnet, daß** die Reibungsverluste die Luftreibungsverluste und/oder die lastabhängigen Lagerreibungsverluste sind.

3. Verfahren nach Anspruch 2, **dadurch gekennzeichnet, daß** mit Hilfe der Verlustleistungsaufnahme, der Lagerbelastung und der Lufteigenschaftswerte die Prüfstandsparameter errechnet werden, die zur Bildung der aktuellen Luftreibungsverluste und / oder der aktuellen lastabhängigen Lagerreibungsverluste dienen.

4. Verfahren nach Anspruch 3, **dadurch gekennzeichnet, daß** die Lagerreibungsverluste anhand der Gleichung $F_{La} = c_1 G + c_2 v^{2/3}$ und die Luftreibungsverluste anhand der Gleichung $F_{Lu} = c_3 ρ v^2$ berechnet werden, wobei $c_1$, $c_2$ und $c_3$ die ermittelten Prüfstandsparameter, G die Lagerbelastung, v die Geschwindigkeit und ρ die Luftdichte sind.

5. Verfahren nach einem der Ansprüche 3 oder 4, **dadurch gekennzeichnet, daß** als Lufteigenschaftswerte der Luftdruck, die Luftfeuchte und die Lufttemperatur erfaßt und daraus die Luftdichte errechnet wird.

6. Verfahren nach einem der Ansprüche 3 bis 5, **dadurch gekennzeichnet, daß** die aktuellen lastabhängigen Lagerreibungsverluste mit dem vorgegebenen bzw. ermittelten Fahrzeuggewicht errechnet werden.

7. Verfahren nach einem der vorhergehenden Ansprüche, **dadurch gekennzeichnet, daß** die ermittelten aktuellen lastabhängigen Lagerreibungsverluste und die aktuellen Luftreibungsverluste mit dem jeweiligen Soll-Drehmoment so verknüpft werden, daß dadurch das Belastungsmoment um die Reibungsverluste korrigiert wird.

8. Vorrichtung zur Berücksichtigung der Reibungsverluste bei der Massensimulation auf ortsfesten Prüfständen, mit einer Korrekturschaltung (10), **dadurch gekennzeichnet, daß** die Korrekturschaltung mit Hilfe der aktuellen Lufteigenschaftswerte und / oder der aktuellen Lagerbelastungswerte anhand von durch Aufnahme von Verlustkennlinien ermittelten Prüfstandsparametern die jeweiligen Luftreibungs- und / oder die jeweiligen lastabhängigen Lagerreibungsverluste errechnet, die zur Korrektur des Belastungsmoments dienen.

9. Vorrichtung nach Anspruch 8, **dadurch gekennzeichnet, daß** eine Witterungserfassungsvorrichtung (13) vorgesehen ist, welche die Lufteigenschaftswerte Luftdruck, Lufttemperatur und Luftfeuchte erfaßt und daraus die aktuellen Luftdichtewerte ermittelt, die der Korrekturschaltung zugeführt werden.

10. Vorrichtung nach einem der Ansprüche 8 oder 9, **dadurch gekennzeichnet, daß** die Korrekturschaltung (10) als elektronische Schaltung ausgebildet ist oder ein Rechenprogramm einer Rechenschaltung darstellt.

## Claims

1. A method of taking into account the frictional losses which occur when simulating masses on static test stands wherein, for the purposes of taring the test stand, the speed-dependent frictional losses are determined with the aid of a recording of the power dissipation in dependence on the speed, **characterised in that**
the test stand parameters for the differing frictional losses are determined at one working point by recording a characteristic loss curve, and the time varying frictional losses are taken into account in a calculation process by detecting the influencing parameters and are used for the purposes of correcting the moment of load.

2. A method in accordance with Claim 1, **characterised in that** the frictional losses are the air friction losses and/or the load-dependent bearing friction losses.

3. A method in accordance with Claim 2, **characterised in that** the test stand parameters, which serve for forming the actual air friction losses and/or the actual load-dependent bearing friction losses, are calculated with the aid of the power dissipation recording, the bearing load and the air property values.

4. A method in accordance with Claim 3, **characterised in that** the bearing friction losses are calculated with the aid of the equation $F_{La} = c_1 G + c_2 V^{2/3}$ and the air friction losses are calculated with the aid of the equation $FLU = c_3 \rho V^2$, where $c_1$, $c_2$ and $c_3$ are the test stand parameters that have been determined, G is the bearing load, v is the speed and $\rho$ is the air density.

5. A method in accordance with either of the Claims 3 or 4, **characterised in that** the air property values are detected in the form of the air pressure, the air humidity and the air temperature, and the density of the air is calculated therefrom.

6. A method in accordance with any of the Claims 3 to 5, **characterised in that** the actual load-dependent bearing friction losses are calculated with the aid of the predefined or the detected weight of the vehicle.

7. A method in accordance with any of the preceding Claims, **characterised in that** the actual load-dependent bearing friction losses that have been determined and the actual air friction losses are logically combined with the pertinent reference torque in such a manner that the load moment is corrected for the frictional losses.

8. A device for taking into account the frictional losses which occur when simulating masses on static test stands including a correcting circuit (10), **characterised in that** the correcting circuit calculates the pertinent losses due to air friction and/or the pertinent losses due to load-dependent bearing friction with the aid of the actual air property values and/or the actual bearing load values on the basis of test stand parameters that were determined by recording characteristic loss curves.

9. A device in accordance with Claim 8, **characterised in that** there is provided an atmospheric conditions detecting device (13) which detects the air property values, air pressure, air temperature and air humidity and determines therefrom the actual air density values which are supplied to the correcting circuit.

10. A device in accordance with either of Claims 8 or 9, **characterised in that** the correcting circuit (10) is in the form of an electronic circuit or is represented by a computer program in a computing circuit.

## Revendications

1. Procédé pour tenir compte des pertes par friction dans la simulation de masses sur des bancs d'essai fixes, dans lequel on détermine, à l'aide d'un enregistrement de perte de puissance en fonction de la vitesse, les pertes par friction dépendant de la vitesse, pour étalonner le banc d'essai, **caractérisé en ce que** les paramètres du banc d'essai sont déterminés pour les différentes pertes par friction en un point de travail, par l'enregistrement d'une courbe caractéristique des pertes, et les pertes par friction variant dans le temps sont prises en compte par calcul par détection des paramètres d'influence, et sont utilisées pour la correction du moment de charge.

**2.** Procédé selon la revendication 1, **caractérisé en ce que** les pertes par friction sont les pertes par friction dans l'air et/ou les pertes par friction dans les paliers, qui dépendent de la charge.

**3.** Procédé selon la revendication 2, **caractérisé en ce qu'**à l'aide de l'enregistrement de la perte de puissance, de la charge sur les paliers et des valeurs caractéristiques de l'air, on calcule les paramètres du banc d'essai qui servent à former les pertes actuelles par friction dans l'air et/ou les pertes actuelles par friction dans les paliers qui dépendent de la charge.

**4.** Procédé selon la revendication 3, **caractérisé en ce que** les pertes par friction dans les paliers sont calculées à l'aide de l'équation
$F_{La} = c_1 G + c_2 V^{2/3}$ et les pertes par friction dans l'air à l'aide de l'équation $F_{LU} = c_3 \rho v^2$, $c_1$, $c_2$ et $c_3$ étant les paramètres déterminés du banc d'essai, G la charge sur les paliers, v la vitesse et $\rho$ la masse volumique de l'air.

**5.** Procédé selon l'une des revendications 3 ou 4, **caractérisé en ce qu'**on enregistre comme valeurs caractéristiques de l'air la pression de l'air, l'humidité de l'air et la température de l'air, et on calcule à partir de celles-ci la masse volumique de l'air.

**6.** Procédé selon l'une des revendications 3 à 5, **caractérisé en ce que** les pertes actuelles par friction dans les paliers dépendant de la charge sont calculées avec le poids prédéfini ou déterminé du véhicule.

**7.** Procédé selon l'une des revendications précédentes, **caractérisé en ce que** les pertes par friction actuelles déterminées dans les paliers dépendant de la charge et les pertes par friction actuelles dans l'air sont corrélées au couple de rotation de consigne respectif, de manière à corriger par là le moment de charge en tenant compte des pertes par friction.

**8.** Dispositif pour tenir compte des pertes par friction dans la simulation de masses sur des bancs d'essai fixes, comportant un circuit de correction (10), **caractérisé en ce que** le circuit de correction calcule, à l'aide des valeurs caractéristiques actuelles de l'air et/ou des valeurs actuelles de charge sur les paliers, au moyen de paramètres du banc d'essai déterminés par enregistrement de courbes caractéristiques des pertes, les pertes respectives par friction dans l'air et/ou les pertes respectives par friction dans les paliers dépendant de la charge, qui servent à la correction du moment de charge.

**9.** Dispositif selon la revendication 8, **caractérisé en ce qu'**il est prévu un dispositif d'enregistrement météorologique 13 qui enregistre les valeurs caractéristiques de l'air que sont la pression de l'air, la température de l'air et l'humidité de l'air, et détermine à partir de celles-ci les valeurs actuelles de la masse volumique de l'air, qui sont envoyées au circuit de correction.

**10.** Dispositif selon l'une des revendications 8 ou 9, **caractérisé en ce que** le circuit de correction 10 est réalisé en tant que circuit électronique ou constitue un programme de calcul d'un circuit de calcul.

$$M_p = \Delta\Theta \; \frac{d\omega}{dt}$$